Europäisches Patentamt

European Patent Office

Office européen des brevets

(19)

(11) Veröffentlichungsnummer: **0 007 043**
**B1**

(12) **EUROPÄISCHE PATENTSCHRIFT**

(45) Veröffentlichungstag der Patentschrift: **26.05.82**

(21) Anmeldenummer: **79102177.7**

(22) Anmeldetag: **29.06.79**

(51) Int. Cl.³: **C 08 F 236/04,**
C 08 F 212/02, C 08 F 2/22

(54) **Verfahren zur Herstellung von emulgatorfreien, selbstvernetzenden Kautschuklatices.**

(30) Priorität: **11.07.78 DE 2830455**

(43) Veröffentlichungstag der Anmeldung:
**23.01.80 Patentblatt 80/2**

(45) Bekanntmachung des Hinweises auf die Patenterteilung:
**26.05.82 Patentblatt 82/21**

(84) Benannte Vertragsstaaten:
**BE DE FR GB IT NL SE**

(56) Entgegenhaltungen:
**US - A - 3 882 070**
**US - A - 4 001 163**

(73) Patentinhaber: **BAYER AG**
**Zentralbereich Patente, Marken und Lizenzen**
**D-5090 Leverkusen 1, Bayerwerk (DE)**

(72) Erfinder: **Heins, Ferdinand, Dr.**
**Adalbert-Stifter-Strasse 49**
**D-4006 Erkrath 1 (DE)**
Erfinder: **Matner, Martin, Dr.**
**Dorfstrasse 14**
**D-5068 Odenthal (DE)**

Courier Press, Leamington Spa, England.

Verfahren zur Herstellung von emulgatorfreien, selbstvernetzenden Kautschuklatices

Die vorliegende Erfindung betrifft ein Verfahren zur Herstellung emulgatorfreier, selbstvernetzender Kautschuklatices aus (Meth)acrylsäure, N - Alkoxymethyl - (meth)acryl - amid und acyclischen konjugierten Dienen sowie Arylvinylmonomeren und/oder (Meth)acrylnitril.

Üblicherweise werden bei der konventionellen Emulsions-polymerisation die Monomeren in Gegenwart eines freie Radikale liefernden Initiators und eines Emulgiermittels polymerisiert, welches die gebildeten Polymerpartikel in dispergiertem Zustand hält. Die Anwesenheit von Emulgatoren führt jedoch häufig zu Schwierigkeiten bei der Verarbeitung der Latices infolge zu geringer mechanischer Stabilität oder durch Schaumbildung sowie zu einer verminderten Naßfestigkeit der mit derartigen Dispersionen hergestellten Überzüge oder der damit behandelten Substrate sowie zu einer verminderten Haftung des Bindemittels auf den Substraten.

Es ist bekannt, daß man die Stabilität von Kautschuklatices erhöhen und die Wasserempfindlichkeit der Filme herabsetzen kann, indem man die Emulsionspolymerisation bei Gegenwart von Emulgatoren durchführt, welche in das Polymer eingebaut werden wie z.B. Halbester aus Maleinsäure und Fettalkoholen (DT-AS 1 011 548) oder 4 - Styrolundecansäure (US-PS 2 868 755). Durch diese innere Bindung der oberflächenaktiven Substanzen wird die Empfindlichkeit der Latices gegenüber Scherkräften wesentlich verringert gegenüber solchen Latices, bei denen die Polymerteilchen durch Adsorption von Emulgatormolekülen stabilisiert sind.

Auch durch Einbau von Monomeren mit stark dissoziierenden Gruppen werden Kautschuklatices erhalten, die eine wesentlich höhere Stabilität aufweisen als solche die adsorbierte oberflächenaktive Substanzen enthalten. Derartige stabile emulgatorfreie Kautschuklatices werden durch Copolymerisation von Sulfonsäuregruppen tragenden Monomeren in wäßriger Emulsion erhalten, z.B. durch Einbau der 4 - Styrolsulfonsäure (US-PS 2 913 429 und 3 306 871) oder mit Hilfe von Estern aus Acryl- oder Methacrylsäure und der 2-Hydroxy ethansulfonsäure wie z.B. 2 - Sulfoethylacrylat (US-PS 2 914 499). Auf diese Weise wird eine Stabilisierung der Latexteilchen durch Sulfonatgruppen erreicht, die für eine ausreichende Ladung auf der Teilchenoberfläche sorgen.

Aus der US-PS 3 784 498 ist es bekannt, emulgatorfreie carboxylierte Kautschuklatices dadurch herzustellen, daß man zunächst einen Latex aus der Gesamtmenge der ethyllenisch ungesättigten Carbonsäure und einem Teil der wasserunlöslichen Monomeren bei einem pH-Wert von etwa 2 bis 4 herstellt, nach Umstellung des pH-Wertes auf 7 bis 10 den Rest der Monomeren hinzufügt und weiterpolymerisiert bis vollständiger Umsatz erreicht ist. Durch diese Maßnahme wird die Dissoziation der Carboxylgruppen drastisch erhöht, so daß während der zweiten Polymerisationsstufe die Polymerteilchen durch die Carboxylatgruppen ausreichend stabilisiert sind, wodurch eine Koagulation vermieden wird. Die notwendige Erhöhung des pH-Wertes von 2 bis 4 auf 7 bis 10, welche vorzugsweise mit wäßrigem Ammoniak vorgenommen wird, erschwert das Verfahren jedoch, da die Zugabe des Ammoniaks langsam und vorsichtig efolgen muß und oftmals zu starker Koagulatbildung führt.

Es ist ferner bekannt, daß man bei Gegenwart oder Abwesenheit von Emulgiermitteln carboxylierte Butadien/Styrol-oder Butadien/Acrylnitril-Latices mit selbstvernetzenden Eigenschaften herstellen kann, indem man als hitzereaktive Komponente N-Methylolacrylamid oder -methacrylamid copolymerisiert (US-PS 3 344 103).

In der US-PS 3 882 070 wird die Verwendung von N - Methylolacrylamid als Cokatalysator bei der Herstellung emulgatorfreier Kautschuklatices beschrieben, wodurch die Bildung von Sulfatendgruppen aus dem als Initiator verwendeten Peroxodisulfat begünstigt werden soll.

Die Verwendung von Peroxodisulfat als Initiator erfordert jedoch Polymerisationstemperaturen oberhalb von etwa 70°C, da nur auf diese Weise ein genügend rascher Zerfall des Peroxodisulfats und somit ausreichende Polymerisationsgeschwindigkeiten erreichbar sind. Da jedoch bei Abwesenheit von Emulgatoren selbst bei Verwendung größerer Mengen an Initiator infolge der geringen Wasserlöslichkeit der konjugierten Diene oder Vinylaromaten insbesondere bei Anwesenheit von Molekulargewichtsreglern verhältnismäßig lange Polymerisationszeiten notwendig sind, führt die Verwendung von N - Methylolacrylamid oder -methacrylamid bei den angewandten, relativ hohen Polymerisationstemperaturen und niedrigen pH-Werten bereits während der Polymerisation zu einer starken Vernetzung des Polymerisats, die sich oftmals in der Bildung von erheblichen Mengen Koagulat äußert, so daß die technischen Herstellungsmöglichkeiten entsprechender Latices stark begrenzt sind (US-PS 3 344 103).

Es wurde nun gefunden, daß emulgatorfreie selbstvernetzende carboxylierte Latices aus (Meth)acrylsäure, N-Alkoxymethyl-(meth)-acrylamid, Dienen sowie Arylvinyl-monomeren und/oder (Meth)acrylnitril unter Verwendung eines Peroxodisulfats als Radikalinitiator erhalten werden, wenn bei einem pH-Wert von 3,5 bis 7 mindestens ein Teil von (Meth) - acrylsäure, ein Teil von Dien und weiteren Monomeren polymerisiert wird, der Rest der Monomeren ein- oder mehrstufig zugegeben wird und die Polymerisation bei diesem pH-Wert jeweils bis zu einem Umsatz von mindestens 50% der Monomeren und in der letzten Stufe bis zu einem Umsatz von 85 bis 100% der Monomeren durchgeführt wird. Das erfindungsgemäße Verfahren ermöglicht es, entsprechende Kautschuklatices ohne Verwendung von Emulgatoren herzustellen. Die Selbstvernetzbarkeit wird durch die Copolymerisation von N - Alkoxymethylacrylamiden und/oder -methacrylamiden erreicht. Durch den Einsatz der Alkylether anstelle der freien N - Methylolverbindungen wird die Reaktivität der selbstvernetzenden Gruppen soweit herabgesetzt, daß sie während der Polymerisation in ausreichendem Maße erhalten bleiben und Latices mit wesentlich höherer Stabilität erhalten werden.

Das Verfahren wird im allgemeinen so durchgeführt, daß man in einem Reaktor Wasser und mindestens einen Teil von (Meth)acrylsäure, einen Teil von konjugiertem Dien sowie Arylvinylmonomeren und/oder (Meth)acrylnitril und gegebenenfalls N-Alkoxymethyl(meth)acrylamid vorlegt und die Polymerisation bei einer Temperatur oberhalb 70°C, vorzugsweise bei 75—95°C, mit einer wäßrigen vorzugsweise ammoniakalischen Peroxodisulfat-Lösung initiiert, deren Ammoniakgehalt so bemessen wird, daß die Polymerisation bei einem pH zwischen 3,5 und 7 stattfindet. Man läßt bis zu einem Umsatz von mindestens 50% polymerisieren und fügt je nach Druckverhältnissen im Reaktor und angestrebter Endkonzentration chargenweise weitere Monomere, N - Alkoxymethyl - (meth)acrylamid sowie gegebenenfalls (Meth)acrylsäure und erneut wäßrige, vorzugsweise ammoniakalische Peroxodisulfat-Lösung hinzu, so daß die Polymerisation bei einem pH-Wert zwischen 3,5 und 7 weiter geführt wird.

Im allgemeinen genügen bei dieser Polymerisation zwei oder drei Stufen, doch sind auch mehr Polymerisationsstufen möglich. Bei jeder Polymerisationsstufe wird solange polymerisiert, bis ein Umsatz von jeweils mindestens 50% erreicht ist. In der letzten Stufe wird die Polymerisation bis zu einem Umsatz von 85 bis 100% der Monomeren durchgeführt. Man erhält einen Latex mit einem Feststoffgehalt von 30 bis 65, vorzugsweise von 40 bis 60 Gew.-%.

Zur Einstellung des pH-Wertes von 3,5 bis 7 während der Polymerisation sind sowohl organische als auch anorganische Basen geeignet, z.B. NaHCO$_3$, Ammoniak oder Triethylamin. Vorzugsweise verwendet man aliphatische Amine und Ammoniak, wobei Ammoniak besonders bevorzugt ist.

Die Gesamtmenge des bei dem erfindungsgemäßen Verfahren als Initiator verwendeten Peroxodisulfats beträgt 0,5 bis 3,0 Gew.-Teile, bezogen auf die Gesamtmenge an Monomeren. Als Initiatoren geeignet sind Salze der Peroxodischwefelsäure wie Natrium-, Kalium- oder bevorzugt Ammoniumperoxodisulfat. In einer bevorzugten Ausführungsform initiiert man die einzelnen Polymerisationsstufen durch Zugabe einer wäßrig-ammoniakalischen Peroxodisulfat-Lösung, wodurch gleichzeitig der pH-Wert auf 3,5 bis 7 eingestellt wird.

Überraschenderweise ist das erfindungsgemäße Verfahren so universell anwendbar, daß das Verhältnis von konjugiertem Dien zu Arylvinylmonomer und/oder (Meth)acrylnitril in sehr weiten Grenzen variiert werden kann. Dementsprechend erlaubt die vorliegende Erfindung die Herstellung von solchen Kautschuklatices aus den o.g. Monomeren, welche 10 bis 90 Gew.-Teile eines oder mehrerer acyclischer konjugierter Diene mit 4 bis 9 Kohlenstoffatomen, 0 bis 90 Gew.-Teile eines oder mehrerer Arylvinylmonomerer mit 8 bis 12 Kohlenstoffatomen und/oder 0 bis 50 Gew.-Teile (Meth)acrylnitril enthalten, wobei die Summe der letzten beiden Komponenten 10 bis 90 Gew.-Teile beträgt.

Gegenstand der Erfindung ist somit ein Verfahren zur Herstellung eines emulgatorfreien, selbstvernetzenden Kautschuklatex aus 1 bis 6 Gew.-Teilen (Meth)acrylsäure, 0,5 bis 6 Gew.-Teilen N - Alkoxymethyl - (meth)acrylamid und 88 bis 98,5 Gew.-Teilen eines Gemisches aus 10 bis 90 Gew.-Teilen eines oder mehrerer acyclischer konjugierter Diene mit 4 bis 9 Kohlenstoffatomen und 10 bis 90 Gew.-Teilen eines oder mehrerer Arylvinylmonomerer mit 8 bis 12 Kohlenstoffatomen und/oder (Meth)-acrylnitril, wobei die Menge an (Meth)acrylnitril maximal 50 Gew.-Teile beträgt, dadurch gekennzeichnet, daß man

a) eine wäßrige Emulsion herstellt, indem man mindestens einen Teil von (Meth)acrylsäure, einen Teil von Dien und weiteren Monomeren zu Wasser zugibt,

b) durch Zugabe einer wäßrigen Lösung eines Peroxodisulfats die Polymerisation startet,

c) bei einem pH-Wert zwischen 3,5 und 7 und einer Temperatur oberhalb 70°C in einer ersten Stufe bis zu einem Umsatz von mindestens 50% der Monomeren polymerisiert,

d) den Rest der Monomeren sowie weitere wäßrige Peroxodisulfat-Lösung in einer oder mehreren weiteren Stufen zugibt,

e) die Polymerisation bei einem pH-Wert von 3,5 bis 7 und oberhalb 70°C bis zu einem jeweiligen Umsatz von mindestens 50% der Monomeren und in der letzten Stufe bis zu einem Umsatz von 85 bis 100% der Monomeren fortführt.

Geeignete acyclische konjugierte Diene mit 4 bis 9 Kohlenstoffatomen sind z.B. Butadien-(1,3), 2 - Methylbutadien - (1,3) (Isopren), 2,3 - Dimethylbutadien-(1,3), Piperylen, 2 - Neopentylbutadien - (1,3) und andere substituierte Diene wie beispielsweise 2 - Chlorbutadien - (1,3) (Chloropren), 2 - Cyanobutadien - (1,3) sowie substituierte geradkettige konjugierte Pentadiene und geradkettige oder verzweigte Hexadiene. Die Fähigkeit, mit Arylvinylmonomeren besonders gut zu copolymerisieren, machen Butadien - (1,3) zum bevorzugten Monomer.

Geeignete Arylvinylmonomere sind solche, bei denen die gegebenenfalls in $\alpha$ - Stellung alkylsubstituierte, Vinylgruppe direkt an einen aus 6 bis 10 Kohlenstoffatomen bestehenden aromatischen Kern gebunden ist, beispielsweise Styrol und substituierte Styrole wie 4 - Methylstyrol, 3 - Methylstyrol, 2,4 - Dimethylstyrol, 2,4 - Diethylstyrol, 4 - Isopropylstyrol, 4 - Chlorstyrol, 2,4 - Dichlorostyrol, Divinylbenzol, $\alpha$ - Methylstyrol and Vinylnaphthalin. Aus Gründen der Zugänglichkeit und wegen der Fähigkeit, insbesondere mit Butadien - (1,3) hervorragend zu copolymerisieren, stellt Styrol das bevorzugte Monomer dar.

Die bei der Durchführung des erfindungsgemäßen Verfahrens verwendeten Alkylether des N - Methylolacrylamids und/oder - methacrylamids sind solche die 1 bis 4 Kohlenstoffatome in der Alkoxygruppe enthalten, insbesondere N - Methoxy - methyl - (meth)acrylamid und N - n - Butoxymethyl - (meth)acrylamid.

Bis zu 25 Gew.Teile der nicht-dissoziierenden Monomeren können durch eines oder mehrere von mit den oben angeführten Monomeren copolymerisierbaren Monomeren ersetzt sein. Hierzu zählen insbesondere Ester der Acryl- und/oder Methacrylsäure von Alkoholen mit bis zu 8 Kohlenstoffatomen sowie Diester aus Alkandiolen und $\alpha,\beta$ - monoethylenisch ungesättigten Monocarbonsäuren wie Ethylenglykoldiacrylat und Butandiol - (1,4) - diacrylat, Amide der $\alpha,\beta$ - monoethylenisch ungesättigten Mono- und Dicarbonsäuren wie Acrylamid und Methacrylamid.

Als weitere Comonomere kommen Vinylester von Carbonsäuren mit 1 bis 18 Kohlenstoffatomen, insbesondere Vinylacetat und Vinylpropionat, Vinylchlorid und Vinylidenchlorid, Vinylether wie Vinylmethylether, Vinylketone wie Vinylethylketon und heterocyclische Monovinylverbindungen wie Vinylpyridin in Betracht.

Neben den genannten Monomeren können zur Beeinflussung der Copolymerisateigenschaften bekannte Kettenübertragungsmittel mitverwendet werden. Geeignet sind langkettige Alkylmercaptane wie z.B. tert. - Dodecylmercaptan, Mercaptocarbonsäuren wie Thioglykolsäure, niedere Dialkyldixanthogenate, Tetrabromkohlenstoff sowie Bromethylbenzol. Die zu verwendende Menge hängt u.a. von der Wirksamkeit des Übertragungsmittels und von der Menge des eingesetzten Diens ab und ist dem Fachmann geläufig.

Wie bereits erwähnt handelt es sich bei dem erfindungsgemäßen Verfahren um ein Polymerisationsverfahren, welches in 2 oder mehr Stufen durchgeführt wird, wobei sich die Anzahl der Stufen nach den Druckverhältnissen im Kessel und der angestrebten Endkonzentration des Latex richtet. Je nach Zahl der Polymerisationsstufen wird bei 2 Stufen etwa die Hälfte der gesamten nicht-dissoziierenden Monomeren vorgelegt, bei 3 Stufen etwa ein Drittel usw. Die Zugabe der Monomeren erfolgt also entsprechend der Anzahl der Stufen in etwa gleichen Teilen. Dies gilt auch für die (Meth)acrylsäure, die jedoch auch in der ersten Stufe bereits vollständig vorgelegt werden kann.

Die Polymerisation wird in der ersten Stufe so durchgeführt, daß ein Umsatz von mindestens 50% erreicht wird. Ein vollständiges Auspolymerisieren in der ersten Stufe ist in der Mehrzahl der Fälle unzweckmäßig, da diese Maßnahme vielfach zur Bildung von Ausscheidungen und Mikrokoagulat führt. Vorzugsweise wird die Polymerisation in erster Stufe bis zu einem Umsatz von 70 bis 85 Gew.-% geführt, anschließend eine zweite Charge der nicht-dissoziierenden Monomeren zugefügt, erneut mit wäßriger Peroxodisulfatlösung versetzt und bei einem pH-Wert zwischen 3,5 und 7 weiterpolymerisiert. Die Zugabe weiterer Acryl- und/oder Methacrylsäure richtet sich nach der Gesamtmenge der Säure, die zwischen 1 und 6 Gew.-Teilen, bezogen auf Gesamtmonomere, liegen kann. Bei Verwendung von nur einem Gew.-Teil wird die Gesamtmenge (Meth)acrylsäure in erster Stufe vorgelegt, bei Verwendung einer größeren Menge ist es jedoch meist günstiger, die Säure auf die einzelnen Polymerisationsstufen zu verteilen. In der zweiten und jeder folgenden Polymerisationsstufe wird so weiterpolymerisiert, daß die dann vorliegenden gesamten Monomeren bis zu einem Umsatz von mindestens 50% polymerisiert sind. In der letzten Stufe wird schließlich solange polymerisiert, bis eine Umsetzung von 85 bis 100% der Monomeren erreicht ist.

Als besonders zweckmäßig erwies es sich, das N - Alkoxy - methyl - (meth)acrylamid erst in letzter Stufe zuzufügen, um das verkappte N - Methylolamid nur kurze Zeit bei der relativ hohen Polymerisationstemperatur zu halten und dadurch eine Vorvernetzung weitgehend auszuschließen. Prinzipiell ist es zwar möglich, in einer vorhergehenden Polymerisationsstufe, beispielsweise in der ersten Stufe, oder verteilt auf mehrere Stufen, die verkappte N - Methylolverbindung zuzusetzen, doch bilden sich bei diesem Verfahren vermehrt Ausscheidungen oder Mikrokoagulat. Fügt man die verkappten N - Methylol - (meth)acrylamide dagegen in der letzten Stufe zu, so läßt sich die Bildung von Ausscheidungen oder Mikrokoagulat vermeiden.

Vielfach ist es ausreichend, das Verfahren in nur zwei Stufen durchzuführen, wobei man in der ersten Stufe bis mindestens 50% Umsatz polymerisiert und in der zweiten Stufe bis 85 bis 100% Umsatz polymerisiert. Anschließend kann gegebenenfalls bei pH 6 bis 8 der Latex in an sich bekannter Weise von Restmonomeren befreit und zur Erhöhung seiner mechanischen Stabilität auf einen pH-Wert von etwa 8 bis 10 eingestellt werden.

Nach dem erfindungsgemäßen Verfahren werden emulgatorfreie selbstvernetzende Kautschuklatices erhalten, welche eine sehr hohe Stabilität gegen chemische und mechanische Einflüsse besitzen, eine äußerst geringe Schaumbildung bei der Verarbeitung aufweisen, mit anderen emulgatorfreien oder emulgatorhaltigen Latices sowie mit flüssigen Phenolharzen verträglich sind und sich leicht durch Entzug von Wasser aufkonzentrieren lassen. Die daraus erhaltenen Polymerfilme und mit diesen Dispersionen hergestellte Artikel zeigen gegenüber solchen, die aus selbst geringe Mengen an Emulgatoren enthaltenden Dispersionen erhalten werden, wesentlich verbesserte Wasserfestigkeit, schnellere Trocknung und Härtung und eine ungleich höhere Haftfestigkeit auf den jeweiligen Substraten sowie eine weitaus geringere Neigung zur Verfärbung. Polymerisatfilme und—produkte mit verbesserter Wasserfestigkeit werden insbesondere aus alkalimetallfreien Latices erhalten, bei deren Herstellung Ammoniak zur Einstellung des pH-Wertes und Ammoniumperoxodisulfat als Initiator verwendet werden. Überraschenderweise zeichnen sich die erfindungsgemäß hergestellten Latices durch eine universelle Anwendbarkeit aus und eigen sich z.B. als Lederfinish, zur Bindung von Vliesen, zur Imprägnierung und Beschichtung von textilen Materialien und Papieren, zur Herstellung von Klebstoffen, Druckfarbenansätzen und wäßrigen Anstrichbinderformulierungen. Der zusätzliche Einbau von Monomeren mit selbstvernetzenden Gruppen macht die erfindungsgemäßen Latices gegenüber nicht-selbstvernetzenden Polymerdispersionen überdies für die meisten der hier erwähnten Einsatzgebiete geeigneter, da sie ohne Zugabe von Vulkanisier-oder Vernetzungsmitteln lediglich durch Erhitzen auf genügend hohe Temperaturen zu beträchtlichen Verbesserungen der Gebrauchseigenschaften der Endartikel führen, z.B. zu erhöhter Beständigkeit gegen kochendes Wasser oder organische Lösungsmittel.

Die folgenden Beispiele erläutern das erfindungsgemäße Verfahren.

Beispiel 1

In einem 40 l-Autoklaven aus rostfreiem Stahl mit Kreuzbalkenrührer wird eine Mischung aus 2500 g Butadien - (1,3), 2300 g Styrol, 8750 g Wasser und 10 g tert. - Dodecylmercaptan bei 80°C mit einer Lösung von 111 g 90% iger Methacrylsäure in 250 g Wasser und einer Lösung von 120 g Ammoniumperoxodisulfat und 30 ml 25% iger wäßriger Ammoniak-Lösung in 500 g Wasser versetzt. Nach einer Polymerisationszeit von 4 Stunden bei konstantem pH von 4,3 ist eine Feststoffkonzentration von etwa 20 Gew.-% erreicht. Daraufhin wird ein Gemisch aus 2500 g Butadien - (1,3), 2300 g Styrol, 200 gN - Methoxymethylmethacrylamid, 111 g 90% iger Methacrylsäure und 30 g tert. - Dodecylmercaptan sowie eine Lösung von 80 g Ammoniumperoxodisulfat und 40 ml 25% iger wäßriger Ammoniak-Lösung in 500 g Wasser zugegeben und die Polymerisation bei praktisch konstantem pH von 4,5 weitergeführt. Nach etwa 11 Stunden erreicht man eine Feststoffkonzentration von 44 Gew.-%. Der Latex wird abgekühlt und mit 280 g 7% iger Diethylhydroxylamin-Lösung zum Abstoppen der Polymerisation versetzt. Anschließend wird mit verdünnter wäßriger Ammoniak-Lösung annähernd neutral gestellt, und der Latex im Vakuum von restlichen Monomeren befreit. Man erhält einen praktisch koagulatfreien Latex mit einem Feststoffgehalt von 44,4 Gew.-%, der bei pH 6,0 eine Oberflächenspannung von 48,0 mN/m und einen Teilchendurchmesser zwischen etwa 250 und 270 nm aufweist.

Dieses Produkt eignet sich zur Bindung von Cellulose- und Lederfasern für die Herstellung von Schuhinnensohlen-materialien.

Vernetzungsprüfung:

Der Latex wird mit einem Antioxidationsmittel versetzt und mit wäßriger Oxalsäure-Lösung auf pH 3,0 gestellt. Die Bruchdehnung eines bei Raumtemperatur aufgetrockneten 0,6 mm dicken Polymerfilms beträgt 1050%, nach einer Vulkanisationszeit von 2,5 Minuten bei 150°C liegt die Bruchdehnung bei 840%.

Vergleichsbeispiel 1

Der in Beispiel 1 durchgeführte Versuch wird wiederholt, das in der zweiten Polymerisationsstufe zugefügte N - Methoxymethyl - methacrylamid jedoch durch die gleiche Menge N - Methylol - acrylamid ersetzt. Der pH-Verlauf und die Polymerisationszeiten sind im wesentlichen die gleichen wie in Beispiel 1. Bei diesem Versuch bilden sich jedoch so erhebliche Mengen Koagulat, daß eine wirtschaftliche Herstellung und Verwendung des Latex praktisch nicht mehr möglich ist.

Nach dem Aufarbeiten wie in Beispiel 1 und Abfiltrieren von den Ausscheidungen wird ein Latex mit 44,3 Gew.-% Feststoffgehalt, einem pH-Wert von 5,8 und einer Oberflächenspannung von 47,3 mN/m erhalten. Die Teilchendurchmesser liegen zwischen etwa 250 und 280 nm.

Vernetzungsprüfung:

Der Latex wird mit einem Antioxidationsmittel versetzt und mit wäßriger Oxalsäure-Lösung auf pH 3,0 eingestellt. Ein bei Raumtemperatur aufgetrockneter 0,7 mm dicker Film zeigt eine Bruchdehnung von 940%. Nach einer Temperung von 2,5 Minuten bei 150°C beträgt die Bruchdehnung nur noch 660%.

Beispiel 2

Ein 40 l-Reaktor aus rostfreiem Stahl mit Kreuzbalkenrührer wird mit 12 500 g Wasser, 1200 g Acrylnitril, 1200 g Styrol, 2400 g Butadien - (1,3) und 10 g tert.-Dodecylmercaptan beschickt, eine Lösung von 222 g 90% iger Methacrylsäure in 250 g Wasser und eine Lösung von 100 g Ammoniumperoxodisulfat und 30 ml 25% iger wäßriger Ammoniak-Lösung in 500 g Wasser bei 75°C zugegeben. Nach einer Polymerisationszeit von 3 Stunden bei 75°C und einem pH-Anstieg von 3,7 auf 4,1 ist eine Feststoffkonzentration von 19 Gew.-% erreicht, wonach in der zweiten Stufe ein Monomerengemisch aus 1200 g Acrylnitril, 1200 g Styrol, 2400 g Butadien - (1,3), 200 g N - Methoxymethyl - methacrylamid und 40 g tert. - Dodecylmercaptan zugegeben werden. Anschließend fügt man noch eine Lösung von 100 g Ammoniumperoxodisulfat und 30 ml 25% iger wäßriger Ammoniak-Lösung in 500 g Wasser hinzu. Nach weiteren 8 Stunden Polymerisationszeit bei 75°C wird nach einem pH-Anstieg von 4,9 auf 5,4 eine Feststoffkonzentration von 43,0 Gew.-% erreicht. Der Latex wird abgekühlt und die Polymerisation wie in Beispiel 1 abgestoppt. Darauf wird mit verdünnter wäßriger Ammoniak-Lösung annähernd neutral gestellt, und der Latex im Vakuum von restlichen Monomeren befreit. Man erhält einen praktisch koagulatfreien Latex mit einem Feststoffgehalt von 47,9 Gew.-%, einem pH-Wert von 5,2 und einer Oberflächenspannung von 47,6 mN/m. Die Dispersion weist eine breite Teilchengrößenverteilung mit Teilchendurchmessern zwischen etwa 260 und 760 nm auf.

Dieses Produkt eignet sich als Deckstrich bei der Herstellung von Klebebändern.

Vernetzungsprüfung:

Der Latex wird nach Versetzen mit einem Alterungsschutzmittel mit wäßriger Oxalsäure-Lösung auf pH 3,0 eingestellt und bei Raumtemperatur zu einem 0,7 mm dicken Film aufgetrocknet. Die Bruchdehnung beträgt 1090%. Nach 2,5 Minuten langem Erhitzen auf 150°C liegt die Bruchdehnung des Films bei 730%.

Beispiel 3

In einem 40 l-Autoklaven aus rostfreien Stahl mit Kreuzbalkenrührer gibt man zu 12 500 g Wasser, 2200 g Butadien - (1,3), 1100 g Acrylnitril und 10 g tert.-Dodecylmercaptan bei 75°C jeweils eine Lösung aus 222 g 90% iger Methacrylsäure in 500 g Wasser und von 50 g Ammoniumperoxodisulfat und 30 ml 25% iger wäßriger Ammonaik-Lösung in 500 g Wasser. Bei einem pH-Anstieg von 3,9 auf 4,4 erreicht man nach 4,5 Stunden Polymerisationszeit bei 75°C eine Feststoffkonzentration von 14,6 Gew.-%, gibt eine Mischung aus 2200 g Butadien - (1,3), 1000 g Acrylnitril und 40 g tert.-Dodecylmercaptan zu und versetzt mit einer Lösung von 50 g Ammoniumperoxodisulfat und 15 ml 25% iger wäßriger Ammoniak-Lösung in 250 g Wasser. Nach weiteren 3,5 Stunden Polymerisationszeit bei einem pH-Anstieg von 4,8 auf 5,9 wird mit einer Lösung aus 2200 g Butadien - (1,3), 900 g Acrylnitril, 200 g N - Methoxymethylmethacrylamid und 40 g tert.-Dodecylmercaptan versetzt, und nochmals die gleiche ammoniakalische Ammoniumperoxodisulfat-Lösung wie beim Start der zweiten Polymerisations-phase zugegeben. Bei einer Feststoffkonzentration von etwa 38 Gew.-% wird zur weiteren Aktivierung der Polymerisation eine Lösung von 20 g Ammoniumperoxodisulfat in 100 g Wasser zugegeben. In der dritten Polymerisations-phase liegt der pH-Wert praktisch konstant bei 6,1. Bei einer nach insgesamt 20 Stunden langen Polymerisationszeit erreichten Feststoffkonzentration von 39,1 Gew.% wird abgekühlt, mit 280 g 7% iger Diethylhydroxylamin-Lösung abgestoppt und der Latex von restlichen Monomeren im Vakuum befreit.

Man erhält einen praktisch koagulatfreien Latex mit einem Feststoffgehalt von 39,3 Gew.-%, einem pH von 6,1 und einer breiten Teil-chengrößenverteilung mit Teilchendurch-messern zwischen etwa 140 und 560 nm. Die Oberflächenspannung liegt bei 50,0 mN/m.

Dieser Latex eignet sich insbesondere zur Herstellung von Einlagevliesstoffen.

**Patentansprüche**

1. Verfahren zur Herstellung eines emulgatorfreien, selbstvernetzenden Kautschuklatex aus 1 bis 6 Gew.-Teilen (Meth)acrylsäure, 0,5 bis 6 Gew.-Teilen N - Alkoxymethyl - (meth)acrylamid und 88 bis 98,5 Gew.-Teilen eines Gemisches aus 10 bis 90 Gew.-Teilen eines oder mehrerer acyclischer konjugierter Diene mit 4 bis 9 Kohlenstoffatomen und 10 bis 90 Gew.-Teilen eines oder mehrerer Arylvinylmonomerer mit 8 bis 12 Kohlenstoffatomen und/oder (Meth)acrylnitril, wobei die Menge an (Meth)acrylnitril maximal 50 Gew.-Teile beträgt, dadurch gekennzeichnet, daß man

a) eine wäßrige Emulsion herstellt, indem man mindestens einen Teil von (Meth)acrylsäure, einen Teil von Dien und weiterer Mono-meren zu Wasser zugibt,

b) durch Zugabe einer wäßrigen Lösung eines Peroxodisulfats die Polymerisation startet,

c) bei einem pH-Wert zwischen 3,5 und 7 und einer Temperatur oberhalb 70°C in einer ersten Stufe bis zu einem Umsatz von mindestens 50% der Monomeren polymerisiert,

d) den Rest der Monomeren sowie weitere wäßrige Peroxodisulfat-Lösung in einer oder mehreren weiteren Stufen zugibt,

e) die Polymerisation bei einem pH-Wert von 3,5 bis 7 und oberhalb 70°C bis zu einem jeweiligen Umsatz von mindestens 50% der Monomeren und in der letzten Stufe bis zu einem Umsatz von 85 bis 100% fortführt.

2. Verfahren nach Anspruch 1, dadurch gekennzeichnet, daß bis zu 25 Gew.-Teile der nicht-dissoziierenden Monomeren durch andere copolymerisierbare Monomere ersetzt werden.

3. Verfahren nach Anspruch 1 und 2, dadurch gekennzeichnet, daß das N - Alkoxymethyl - acrylamid und/oder N - Alkoxymethyl - methacrylamid in der letzten Polymerisationsstufe zugegeben werden.

4. Verfahren nach Anspruch 1 bis 3, dadurch gekennzeichnet, daß ein N - Alkoxymethyl - (meth)acrylamid mit 1 bis 4 Kohlenstoffatomen in der Alkoxygruppe verwendet wird.

5. Verfahren nach Anspruch 1 bis 4, dadurch gekennzeichnet, daß die Gesamtmenge des als Initiator verwendeten Peroxodisulfats 0,5 bis 3,0 Gew.-Teile, bezogen auf die gesamten Monomeren, beträgt.

6. Verfahren nach Anspruch 1 bis 5, dadurch gekennzeichnet, daß die Polymerisation in Gegenwart eines Kettenübertragungsmittels durchgeführt wird.

## Claims

1. A process for the production of an emulsifier-free self-crosslinkable rubber latex from 1 to 6 parts by weight of (meth)acrylic acid, 0.5 to 6 parts by weight of N - alkoxymethyl (meth)acrylamide and 88 to 98.5 parts by weight of a mixture of 10 to 90 parts by weight of one or more acyclic conjugated dienes containing from 4 to 9 carbon atoms and 10 to 90 parts by weight of one or more arylvinyl monomers containing from 8 to 12 carbon atoms and/or (meth)acrylonitrile, the quantity of (meth) - acrylonitrile amounting to at most 50 parts by weight, characterised in that

a) an aqueous emulsion is prepared by adding at least part of the (meth)acrylic acid, part of the diene and further monomers to water,

b) the polymerisation reaction is initiated by the addition of an aqueous solution of a peroxodisulphate,

c) polymerisation is carried out in a first stage at a pH-value of from 3.5 to 7 and at a temperature above 70°C until at least 50% of the monomers have been polymerised,

d) the rest of the monomers and more aqueous peroxodisulphate solution are added in one or more further stages,

e) the polymerisation reaction is continued at a pH-value of from 3.5 to 7 and at a temperature above 70°C until at least 50% of the monomers have been polymerised and, in the last stage, until from 85 to 100% of the monomers have been polymerised.

2. A process as claimed in Claim 1, characterised in that up to 25 parts by weight of the non-dissociating monomers are replaced by other copolymerisable monomers.

3. A process as claimed in Claims 1 and 2, characterised in that the N - alkoxymethyl acrylamide and/or N - alkoxymethyl methacrylamide are added in the final polymerisation stage.

4. A process as claimed in Claims 1 to 3, characterised in that an N - alkoxymethyl (meth)acrylamide containing from 1 to 4 carbon atoms in the alkoxy group is used.

5. A process as claimed in Claims 1 to 4, characterised in that the total quantity of the peroxodisulphate used as initiator amounts to between 0.5 and 3.0 parts by weight, based on the monomer total.

6. A process as claimed in Claims 1 to 5, characterised in that the polymerisation reaction is carried out in the presence of a chain-transfer agent.

## Revendications

1. Procédé de fabrication d'un latex de caoutchouc autoréticulant et exempt d'émulsifiant à partir de 1 à 6 parties en poids d'acide (méth)acrylique, 0,5 à 6 parties en poids de N - alcoxyméthyl - (méth)acrylamide et de 88 à 98,5 parties en poids d'un mélange à 10—90 parties en poids d'un ou plusieurs diènes conjugués acycliques ayant 4 à 9 atomes de carbone et de 10—90 parties en poids d'un ou plusieurs monomères arylvinyliques ayant 8 à 12 atomes de carbone et/ou de (méth)acrylonitrile, la quantité de (méth)acrylonitrile s'élevant à un maximum de 50 parties en poids, caractérisé en ce que

a) on prépare une émulsion aqueuse en ajoutant au moins une partie de l'acide (méth)-, acrylique, une partie du diène et des autres monomères à de l'eau,

b) par l'addition d'une solution aqueuse d'un peroxodisulfate on initie la polymérisation,

c) à une valeur de pH entre 3,5 et 7 et à une température supérieure à 70°C on polymérise dans une première phase jusqu'à une conversion d'au moins 50% des monomères,

d) on ajoute le restant des monomères de même qu'une solution aqueuse supplémentaire dè peroxodisulfate en un ou plusieurs autres stades,

e) on poursuit la polymérisation à une valeur de pH de 3,5 à 7 et au-dessus de 70°C jusqu'à conversion chaque fois d'au moins 50% des monomères et dans le dernier stade jusqu'à une conversion de 85 à 100%.

2. Procédé selon la revendication 1, caractérisé en ce qu'on remplace jusqu'à 25 parties en poids des monomères non-dissociants par d'autres monomères copolymérisables.

3. Procédé selon les revendications 1 et 2, caractérisé en ce qu'on ajoute la N - alcoxyméthyl - acrylamide et/ou N - alcoxyméthyl - méthacrylamide dans le dernier stade de polymérisation.

4. Procédé selon les revendications 1 à 3, caractérisé en ce qu'on utilise une N - alcoxyméthyl - (méth)acrylamide ayant 1 à 4 atomes de carbone dans le groupe alcoxy.

5. Procédé selon les revendications 1 à 4, caractérisé en ce que la quantité totale du peroxodisulfate utilisé comme initiateur s'élève à 0,5—3,0 parties en poids par rapport aux monomères totaux.

6. Procédé selon les revendications 1 à 5, caractérisé en ce qu'on exécute la polymérisation en présence d'un agent de transfert de chaîne.